# EUROPÄISCHE PATENTSCHRIFT

(11) **EP 1 014 660 B1**
(45) Veröffentlichungstag und Bekanntmachung des Hinweises auf die Patenterteilung: **15.03.2006**
(21) Anmeldenummer: 99123997.1
(22) Anmeldetag: 08.12.1999
(51) Int. Cl.: H04M 3/46, H04M 3/42, H04M 7/00

(54) **Verfahren zum Realisieren einer Sammelanschlussfunktion in einem Kommunikationsnetz nach ITU-T H.323**
Method for realizing a collective line function in a communication network according to ITU-T H.323
Méthode pour réaliser une fonction de lignes groupées dans un réseau de communication selon ITU-T H.323

(30) Priorität: 21.12.1998 DE 19859150
(43) Veröffentlichungstag der Anmeldung: 28.06.2000
(73) Patentinhaber: SIEMENS AKTIENGESELLSCHAFT, 80333 München (DE)
(72) Erfinder: Klaghofer, Karl, 81373 München (DE); Kopri, Markku, 82319 Starnberg (DE)

(56) Entgegenhaltungen:
- EP-A- 0 967 764
- US-A- 5 432 840
- US-A- 5 764 750
- THOM G A: "H. 323: THE MULTIMEDIA COMMUNICATIONS STANDARD FOR LOCAL AREA NETWORKS" IEEE COMMUNICATIONS MAGAZINE, IEEE SERVICE CENTER. PISCATAWAY, N.J, US, Bd. 34, Nr. 12, 1. Dezember 1996 (1996-12-01), Seiten 52-56, XP000636454 ISSN: 0163-6804
- TOGA J ET AL: "ITU-T STANDARDIZATION ACTIVITIES FOR INTERACTIVE MULTIMEDIA COMMUNICATIONS ON PACKET-BASED NETWORKS: H.323 AND RELATED RECOMMENDATIONS" COMPUTER NETWORKS AND ISDN SYSTEMS, NORTH HOLLAND PUBLISHING. AMSTERDAM, NL, Bd. 31, Nr. 3, 11. Februar 1999 (1999-02-11), Seiten 205-223, XP000700319 ISSN: 0169-7552
- "ITU-T, H.323, PACKET BASED MULTIMEDIA COMMUNICATIONSSYSTEMS" ITU-T H.323, XX, XX, September 1999 (1999-09), Seiten 1-129, XP002166480

## Beschreibung

Die Erfindung betrifft ein Verfahren zum Realisieren einer Sammelanschlußfunktion in einem Kommunikationsnetz gemäß dem Standard ITU-T H.323. Sammelanschluß in diesem Zusammenhang bedeutet, daß vom einem rufenden Endgerät eine Gruppenadresse gerufen wird, um einen Verbindungsaufbau zu einem unter mehreren Gruppenendgeräten eines Sammelanschlusses zu bewirken.

Sammelanschlußfunktionen sind aus zentral gesteuerten Kommunikationsnebenstellenanlagen bekannt. Bei solchen Kommunikationsnebenstellenanlagen ist eine zentrale Vermittlungseinrichtung vorgesehen, die die Signalisierung zu den einzelnen Gruppenendpunkten eines Sammelanschlusses vornimmt und auch den Verbindungsaufbau zwischen einem Gruppenendpunkt und einem rufenden Endpunkt schaltet.

Abhängig von der Verteilung der Signalisierung von einer zentralen Kommunikationssteuerung an die einzelnen Gruppenendpunkte werden drei grundlegende Sammelanschlußtypen unterschieden. Wenn ein von einem rufenden Endpunkt an die Gruppenadresse gerichteter Ruf gleichzeitig an alle Gruppenendpunkte signalisiert wird, liegt eine "Pick Up"-Gruppenfunktion vor. Wenn der kommende Ruf einem einzigen Gruppenendpunkt signalisiert wird und, falls dieser Gruppenendpunkt innerhalb einer bestimmten Zeitspanne nicht antwortet, jeweils dem nächsten Endpunkt signalisiert wird, liegt eine "Hunting"-Gruppenfunktion vor. Wenn ein an eine Gruppenadresse gerichteter Ruf von der zentralen Steuerung gemäß einer automatischen Rufverteilungsfunktion gezielt einem Gruppenendpunkt signalisiert wird, wird dies mit automatischer Rufverteilung bzw. nach dem englischsprachigen Ausdruck Automatic Call Distribution mit ACD bezeichnet.

In einem Kommunikationsnetz gemäß dem Standard ITU-T H.323, in dem keine zentrale Rufsteuerung, sondern eine Rufsteuerung von Endpunkt zu Endpunkt vorgesehen ist, kann eine Sammelanschlußfunktion entsprechend den bekannten zentral geschalteten Kommunikationssystemen nicht realisiert werden.

Aus der älteren US-Anmeldung mit dem Anmeldeaktenzeichen 09/104,885 ist ein Proxy-Server zur Vereinfachung der Kommunikation zwischen einem ersten und einem zweiten Endpunkt bekannt, bei dem der Proxy-Server und die beiden Endpunkte über ein Kommunikationsnetz verbunden sind. Der erste Endpunkt kommuniziert mit dem zweiten Endpunkt unter Benutzung eines ersten Kommunikationsprotokolls, während der zweite Endpunkt mit dem ersten Endpunkt unter Benutzung eines zweiten Kommunikationsprotokolls kommuniziert. Die beiden Kommunikationsprotokolle sind unterschiedlich, wobei die Kommunikation zwischen ersten und dem zweiten Endpunkt durch den Proxy-Server ermöglicht wird.

Aufgabe der vorliegenden Erfindung ist es, ein Verfahren zum Realisieren einer Sammelanschlußfunktion in einem Kommunikationsnetz gemäß dem Standard ITU-T H.323 anzugeben.

Diese Aufgabe löst die Erfindung durch ein Verfahren mit folgenden Verfahrensschritten:
- Umsetzen einer Alias-Adresse des Sammelanschlusses in eine Gruppentransportadresse einer Proxy-Funktion und Übermitteln einer Verbindungsaufbaumeldung vom rufenden Endpunkt unter Verwendung der Gruppentransportadresse zur Proxy-Funktion;
- Übermitteln einer Verbindungsaufbaumeldung von der Proxy-Funktion unter Verwendung von der Proxy-Funktion bekannten Transportadressen an Gruppenendpunkte des Sammelanschlusses;
- nach Übermitteln einer Antwortmeldung von einem der Gruppenendpunkte an die Proxy-Funktion, Übermitteln der Adresse dieses Endpunktes an den rufenden Endpunkt und Übermitteln der Adresse des rufenden Endpunktes an den antwortenden Gruppenendpunkt durch die Proxy-Funktion;
- Verbindungsaufbau zwischen dem rufenden Endpunkt und dem antwortenden Gruppenendpunkt unter Verwendung der Adressen dieser Endpunkte.

Die Verwendung einer Proxy-Funktion als Steuerung für eine Sammelanschlußfunktion stellt sicher, daß die Sammelanschlußfunktion unabhängig vom Zustand der einzelnen Gruppenendpunkte ausgeführt werden kann. Ein Verbindungsaufbau zwischen Endpunkten eines Kommunikationsnetzes wird gemäß ITU-T H.323 von Seiten der Endpunkte gesteuert. Falls nun ein Endgerät an einem Endpunkt nicht betriebsbereit ist, würde ohne Proxy-Funktion ein Verbindungsaufbauversuch zu diesem Endgerät ins Leere gehen. Durch die endgeräteunabhängige Proxy-Funktion wird also auch bei nicht betriebsbereiten Endgeräten an einzelnen Gruppenendpunkten ein Realisieren der Sammelanschlußfunktion gewährleistet.

Eine Proxy-Funktion ist ähnlich einer Gate-Keeper-Funktion eine logische Funktion innerhalb eines Kommunikationsnetzes. Ein Gate-Keeper ist eine logische Funktion zum Erfüllen von Standardfunktionen wie Adreßauflösung oder Bandbreitenverwaltung. Adreßauflösung bedeutet hierbei, daß ein rufender Endpunkt an den Gate-Keeper einer Alias-Adresse eines zu rufenden Endgerätes sendet und vom Gate-Keeper die Transportadresse, also die Internetprotokolladresse und die Portnummer erhält. Der Gate-Keeper kennt das Verkehrsaufkommen bezüglich Echtzeitanwendungen innerhalb des Netzbereiches, für den er zuständig ist. Wenn ein rufendes Endgerät eine Anfrage für eine Verbindung mit bestimmter Bandbreite zum Gate-Keeper sendet, vergleicht dieser die angefragte Bandbreite mit der verfügbaren Bandbreite und gibt abhängig von dem Vergleichs ergebnis eine Meldung an das rufende Endgerät.

Auch ein Proxy ist eine logische Funktion. Ein erfindungsgemäßer Proxy kennt die Transportadressen aller Mitglieder eines Sammelanschlusses, für den der Proxy über eine Gruppenadresse, eine sogenannte Pilot-Addresse, erreichbar ist. Kommt ein Ruf für diese Gruppenadresse zum Proxy, so versucht der Proxy einen Verbindungsaufbau zu einem der Sammelanschlußgruppenendpunkte nach einer vorgegebenen Vorschrift unter Verwendung der Transportadressen der Gruppenendpunkte der Mitglieder des Sammelanschlusses.

In einer günstigen Ausgestaltung eines erfindungsgemäßen Verfahrens signalisiert die Proxy-Funktion einem rufenden Endgerät, daß sie eine Verbindungsaufbaumeldung an einen Gruppenendpunkt übermittelt. Dadurch kann ein Teilnehmer am rufenden Endpunkt erkennen, daß ein Verbindungsaufbau noch nicht abgeschlossen aber auch nicht abgebrochen ist.

In einer besonderen Ausgestaltung eines erfindungsgemäßen Verfahrens zum Realisieren einer Pick-Up-Gruppen-Sammelanschlußfunktion übermittelt die Proxy-Funktion gleichzeitig an alle Gruppenendpunkte eine Verbindungsaufbaumeldung und übermittelt dem rufenden Endpunkt die Adresse des Gruppenendpunktes von dem die Proxy-Funktion die erste, eine Empfangsbereitschaft signalisierende Antwortmeldung erhält.

In einer anderen Ausgestaltung eines erfindungsgemäßen Verfahrens übermittelt die Proxy-Funktion zur Realisierung einer Hunting-Gruppen-Sammelanschlußfunktion eine Verbindungsaufbaumeldung nur an einen Gruppenendpunkt, wobei dieser Gruppenendpunkt, falls innerhalb einer bestimmten Zeitspanne von diesem Gruppenendpunkt keine Empfangsbereitschaft signalisiert worden ist, eine Verbindungaufbaumeldung an einen anderen Gruppenendpunkt übermittelt wird. Dies wird solange ausgeführt, bis einer der Gruppenendpunkte eine Antwortmeldung übermittelt oder bis eine vorgegebene maximale Zeitspanne abgelaufen ist.

Ein derartiges Realisieren einer Hunting-Funktion führt zwar gegebenenfalls zu längeren Wartezeiten eines rufenden Teilnehmers, verringert aber das Verkehrsaufkommen innerhalb des Kommunikationsnetzes.

Sowohl das zuletzt beschriebene Verfahren zum Realisieren einer Hunting-Gruppen-Sammelanschlußfunktion als auch das zuvor beschriebene Verfahren zum Realisieren einer Pick-Up-Gruppen-Sammelanschlußfunktion können auch dazu verwendet werden, einen Teilnehmer, der über mehrere unterschiedliche Endpunkte erreichbar sein kann, über eine einzige Gruppenadresse zu erreichen. In diesem Fall sind alle Gruppenendpunkte des entsprechenden Sammelanschlusses demselben Teilnehmer zugeordnet.

Eine besondere Ausgestaltungsform eines erfindungsgemäßen Verfahrens der vorstehend beschriebenen Art zur Realisierung einer Hunting-Gruppen-Sammelanschlußfunktion sieht vor, daß einer der Gruppenendpunkte einer Nachrichtenaufzeichnungseinrichtung zugeordnet ist, und daß die Proxy-Funktion eine Verbindungsaufbaumeldung an diesen Gruppenendpunkt erst übermittelt, wenn alle übrigen Gruppenendpunkte keinen Verbindungsaufbau realisiert haben. Ein solches Verfahren ermöglicht es sowohl für einen Sammelanschluß mit unterschiedlichen Teilnehmern, als auch für einen Sammelanschluß, dessen Gruppenendpunkte alle einem Teilnehmer zugeordnet sind, daß ein rufender Teilnehmer eine Nachricht hinterlassen kann.

Eine vorteilhafte Ausgestaltung des oben beschriebenen Verfahrens zur Realisierung einer Hunting-Gruppen-Sammelanschlußfunktion sieht vor, daß die Proxy-Funktion die Reihenfolge, in der Verbindungsaufbaumeldungen zu einzelnen Gruppenendpunkten übermittelt werden, nach einer Vorschrift für automatische Rufverteilung festlegt. Diese Vorschrift kann beispielsweise zum Optimieren der zeitlichen Auslastung der einzelnen Gruppenendpunkte ausgelegt sein. Die Vorschrift zur Rufverteilung kann aber auch von dem Zeitpunkt des letzten Beendens eines Rufs abhängig sein.

Selbstverständlich können die einzelnen Gruppenendpunkte gegebenenfalls auch über von der Gruppenadresse unabhängige Alias-Adressen erreichbar sein. Zum Erreichen eines solchen Gruppenendpunktes über die von der Gruppenadresse unabhängige Alias-Adresse kann hierbei beispielsweise die Alias-Adresse von einer Gate-Keeper-Funktion aufgelöst werden. Demnach übermittelt eine solche Gate-Keeper-Funktion dem rufenden Endpunkt die Transportadresse des speziell gerufenen Gruppenendpunktes.

Nachstehend wird die Erfindung unter Bezugnahme auf die Figuren anhand zweier Ausführungsbeispiele näher erläutert.
- Figur 1: zeigt einen Meldungsflußplan zum Realisieren eines Pick-Up-Gruppen-Sammelanschlusses in einem Kommunikationsnetz nach dem Standard ITU-T H.323 als ein Ausführungsbeispiel eines erfindungsgemäßen Verfahrens in schematischer Darstellung
- Figur 2: zeigt einen Meldungsflußplan zum Realisieren eines Hunting-Gruppen-Sammelanschlusses in einem Kommunikationsnetz nach dem Standard ITU-T H.323 als ein Ausführungsbeispiel eines erfindungsgemäßen Verfahrens in schematischer Darstellung.

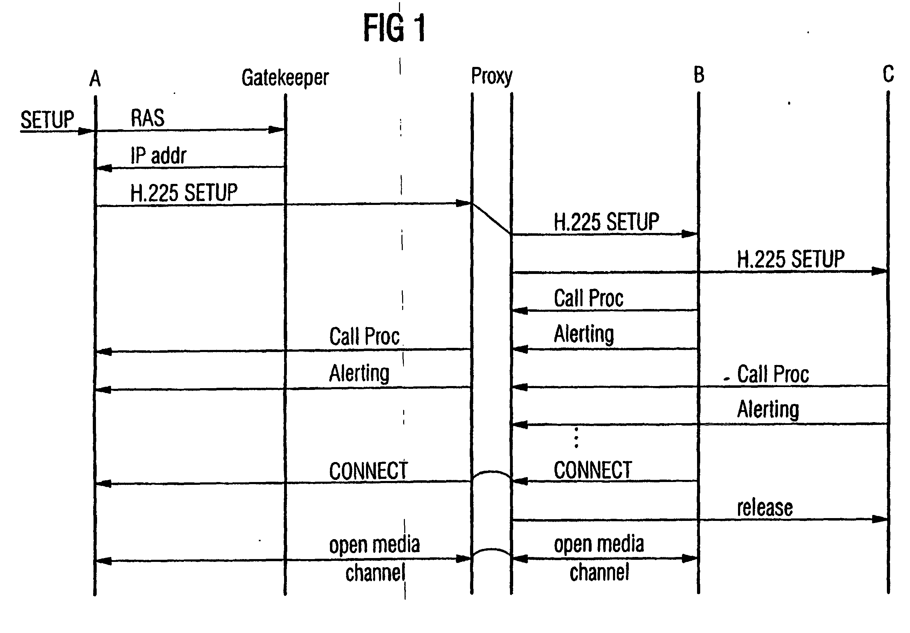

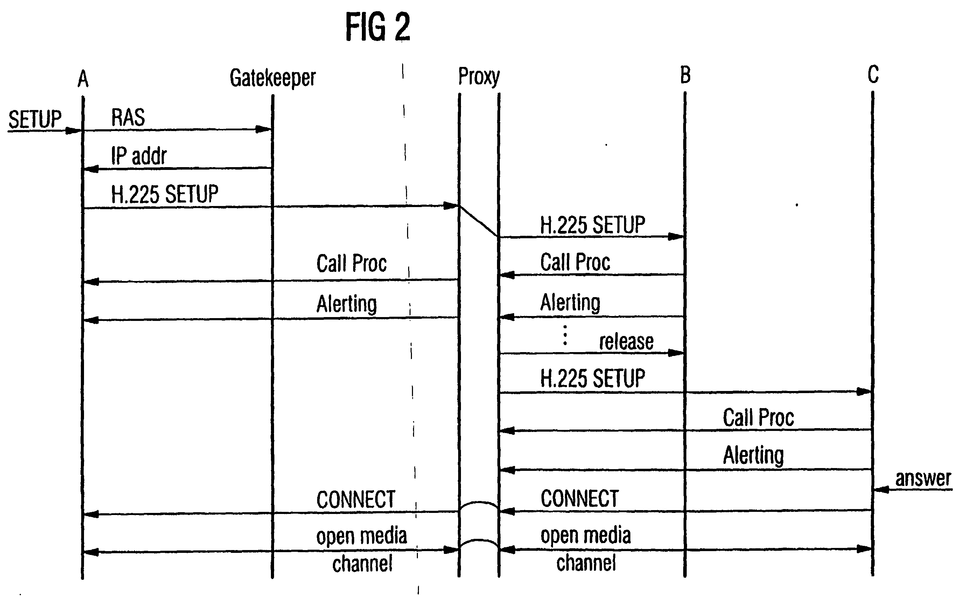

Die Figuren 1 und 2 zeigen jeweils Grundzustände, Ereignisse und den Meldungsfluß zwischen drei Endpunkten A, B und C eines Kommunikationsnetzes nach dem Standard ITU-T H.323 und einer in diesem Kommunikationsnetz vorgesehenen Proxy-Funktion. Im Ausgangszustand befinden sich die Proxy-Funktion Proxy und den Endpunkten A, B und C zugeordnete (nicht dargestellte) Endgeräte jeweils in einem Ruhezustand.

In dem in Figur 1 dargestellten Ablauf zum Realisieren eines Pick-Up-Gruppen-Sammelanschlusses und auch in dem in Figur 2 dargestellten Ablauf zum Realisieren eines Hunting-Gruppen-Sammelanschlusses veranlaßt ein Teilnehmer am Endpunkt A über die Proxy-Funktion Proxy einen Verbindungsaufbau zu einem Sammelanschluß von Endpunkten B und C. Hierzu wird vom Endpunkt A eine RAS-Meldung an den für diesen Endpunkt A zuständigen Gatekeeper übermittelt. RAS steht hierbei für den Ausdruck Registrierung, Administration and Status und entspricht einem Protokoll zwischen Endpunkt und Gatekeeper. In den Ausführungsbeispielen der Figuren 1 und 2 ist der entsprechende Ablauf vereinfacht dargestellt. Üblicherweise sendet der Endpunkt A eine Anfrage bezüglich Zugriffsberechtigung in Form einer RAS-Meldung AdmissionRequest an den Gatekeeper mit Alias-Adresse des zu rufenden Sammelanschlusses B, C. Der Gatekeeper, als logische Funktion, prüft die Berechtigung des rufenden Endpunktes A und übermittelt diesem eine RAS-Meldung AdmissionConfirm zum Bestätigen der Zugriffsberechtigung. Hierbei erhält der Endpunkt A vom Gatekeeper eine Adresse des zu rufenden Sammelanschlusses in Form einer Gruppentransportadresse einer Proxy-Funktion Proxy als routbare Alias-Adresse dieses fiktiven Endpunktes.

Vom Endpunkt A wird eine Verbindungsaufbaumeldung H.225 SETUP mit der Gruppentransportadresse des zu rufenden Sammelanschlusses an die Proxy-Funktion Proxy übermittelt. Eine solche Gruppentransportadresse eines Sammelanschlusses wird auch Pilot Address genannt. Die Proxy-Funktion Proxy erkennt, daß sie die Adressen der tatsächlichen Endpunkte B und C aus einer der Gruppentransportadresse zugeordneten Tabelle entnehmen muß um an diese tatsächlichen Endpunkte B und C eine Meldung H.225 SETUP abzusetzen.

In dem in Figur 1 dargestellten Ablauf zum Realisieren eines Pick-Up-Gruppen-Sammelanschlusses wird die Meldung H.225 SETUP von der Proxy-Funktion Proxy gleichzeitig zum Endpunkt B und zum Endpunkt C weitergeleitet. Der Endpunkt B und der Endpunkt C bestätigen der Proxy-Funktion Proxy die komplette Wahl mit einer Meldung CallProc und das Erkennen eines kommenden Rufs mit einer Meldung Alerting. Die Proxy-Funktion übermittelt diese Meldungen CallProc und Alerting jedoch nur einmal, als Reaktion auf die erste entsprechende empfangene Meldung, an den rufenden Endpunkt A.

Falls, wovon in dem in Figur 1 dargestellten Ausführungsbeispiel eines Ablaufs zum Realisieren eines Pick-Up-Gruppen-Sammelanschlusses ausgegangen wird, ein Teilnehmer oder eine automatisierte Einrichtung am Endpunkt B den vom Endpunkt A signalisierten Ruf entgegennehmen möchte, wird vom Endpunkt B eine Antwortmeldung CONNECT (gemäß ITU-T H.225) über die Proxy-Funktion Proxy zum Endpunkt A übermittelt. Daraufhin wird eine Prozedur zum Öffnen logischer Kanäle zwischen den Endpunkten A und B eingeleitet. Das Öffnen logischer Kanäle kann hierbei entweder bereits durch die SETUP-Meldung vorbereitet und mit der CONNECT-Meldung abgeschlossen werden oder durch die CONNECT-Meldung eingeleitet werden.

Die logischen Kanäle, also die Kanäle zur Übertragung von Nutzinformation, werden unmittelbar zwischen den Endpunkten A und B geöffnet wohingegen die Signalisierungsverbindungen jeweils zur Proxy-Funktion Proxy aufgebaut worden sind und Meldungen von dieser Proxy-Funktion Proxy an die eigentlichen Adressaten Endpunkt A bzw. Endpunkt B weitergeleitet werden.

In dem in Figur 2 dargestellten Ablauf zum Realisieren eines Hunting-Gruppen-Sammelanschlusses wird die Meldung H.225 SETUP von der Proxy-Funktion Proxy zuerst zum Endpunkt B weitergeleitet. Der Endpunkt B bestätigt der Proxy-Funktion Proxy die komplette Wahl mit einer Meldung CallProc und das Erkennen eines kommenden Rufs mit einer Meldung Alerting. Die Proxy-Funktion übermittelt diese Meldungen CallProc und Alerting an den rufenden Endpunkt A.

Falls, wovon in dem in Figur 2 dargestellten Ausführungsbeispiel eines Ablaufs zum Realisieren eines Hunting-Gruppen-Sammelanschlusses ausgegangen wird, am Endpunkt B innerhalb einer festgelegten Zeitperiode der vom Endpunkt A signalisierte Ruf nicht entgegengenommen wird, löst die Proxy-Funktion Proxy die Signalisierungsverbindung zum Endpunkt B mit der Meldung release aus.

Da der angebotene Ruf am Endpunkt B nicht angenommen worden ist, leitet die Proxy-Funktion Proxy die Meldung H.225 SETUP zum Endpunkt C weiter. Der Endpunkt C bestätigt der Proxy-Funktion Proxy die komplette Wahl mit einer Meldung CallProc und das Erkennen eines kommenden Rufs mit einer Meldung Alerting. Die Proxy-Funktion übermittelt diese Meldungen CallProc und Alerting jedoch nicht mehr an den rufenden Endpunkt A, da dies bereits zuvor aufgrund der entsprechenden Meldungen vom Endpunkt B erfolgt ist.

Falls, wovon in dem in Figur 2 dargestellten Ausführungsbeispiel eines Ablaufs zum Realisieren eines Hunting-Gruppen-Sammelanschlusses ausgegangen wird, ein Teilnehmer oder eine automatisierte Einrichtung am Endpunkt C den vom Endpunkt A signalisierten Ruf entgegennehmen möchte, wird vom Endpunkt C eine Antwortmeldung CONNECT (gemäß ITU-T H.225) über die Proxy-Funktion Proxy zum Endpunkt A übermittelt. Daraufhin wird eine Prozedur zum Öffnen logischer Kanäle zwischen den Endpunkten A und C eingeleitet. Das Öffnen logischer Kanäle kann hierbei entweder bereits durch die SETUP-Meldung vorbereitet und mit der CONNECT-Meldung abgeschlossen werden oder durch die CONNECT-Meldung eingeleitet werden.

Die logischen Kanäle, also die Kanäle zur Übertragung von Nutzinformation, werden unmittelbar zwischen den Endpunkten A und C geöffnet wohingegen die Signalisierungsverbindungen jeweils zur Proxy-Funktion Proxy aufgebaut worden sind und Meldungen von dieser Proxy-Funktion Proxy an die eigentlichen Adressaten Endpunkt A bzw. Endpunkt C weitergeleitet werden.

Die beschriebenen Realisierungen des Leistungsmerkmals Sammelanschluß ist hierbei unabhängig davon, ob wie in den Ausführungsbeispielen ein Gatekeeper zur Wegelenkung (Routing), beispielsweise durch Adreßumsetzung, verwendet wird.

## Patentansprüche

1. Verfahren zum Realisieren einer Sammelanschlußfunktion in einem Kommunikationsnetz gemäß dem Standard ITU-T H.323, wobei von einem rufenden Endpunkt (A) eine Gruppenadresse gerufen wird, um einen Verbindungsaufbau zu einem unter mehreren Gruppenendpunkten (B, C) eines Sammelanschlusses zu bewirken, **gekennzeichnet durch** folgende Schritte:
- Umsetzen einer Alias-Adresse des Sammelanschlusses in eine Gruppentransportadresse einer Proxy-Funktion (Proxy) und Übermitteln einer Verbindungsaufbaumeldung (H.225 Setup) vom rufenden Endpunkt (A) unter Verwendung der Gruppentransportadresse (Pilot Address) zur Proxy-Funktion;
- Übermitteln einer Verbindungsaufbaumeldung (H.225 Setup) von der Proxy-Funktion (Proxy) unter Verwendung von der Proxy-Funktion (Proxy) bekannten Transpartadressen an Gruppenendpunkte (B, C) des Sammelanschlusses;
- nach Übermitteln einer Antwortmeldung von einem der Gruppenendpunkte (B) an die Proxy-Funktion (Proxy) erfolgt ein Übermitteln der Adresse dieses Endpunktes (B) an den rufenden Endpunkt (A) und ein Übermitteln der Adresse des rufenden Endpunktes (A) an den antwortenden Gruppenendpunkt (B) durch die Proxy-Funktion (Proxy);
- Verbindungsaufbau zwischen dem rufenden Endpunkt (A) und dem antwortenden Gruppenendpunkt (B) unter Verwendung der Adressen dieser Endpunkte (A, B).

2. Verfahren nach Anspruch 1,
**dadurch gekennzeichnet,**
**daß** die Proxy-Funktion (Proxy) dem rufenden Endpunkt (A) das Übermitteln einer Verbindungsaufbaumeldung an die Gruppenendpunkte (B, C) signalisiert.

3. Verfahren nach Anspruch 1 der 2,
**dadurch gekennzeichnet,**
**daß** die Proxy-Funktion (Proxy) gleichzeitig an alle Gruppenendpunkte (B, C) eine Verbindungsaufbaumeldung (H.225 Setup) übermittelt und dem rufenden Endpunkt (A) die Adresse des Gruppenendpunktes (B) übermittelt, von dem sie die erste Antwortmeldung erhält.

4. Verfahren nach Anspruch 1 oder 2,
**dadurch gekennzeichnet,**
**daß** die Proxy-Funktion (Proxy) eine Verbindungsaufbaumeldung an einen der Gruppenendpunkte (B, C) und, falls innerhalb einer bestimmten Zeitspanne von diesem Gruppenendpunkt keine Antwortmeldung zur Proxy-Funktion (Proxy) übermittelt worden ist, eine Verbindungsaufbaumeldung an einen anderen der Gruppenendpunkte (B, C) übermittelt, bis einer der Gruppenendpunkte (B, C) eine Antwortmeldung übermittelt.

5. Verfahren nach Anspruch 4,
**dadurch gekennzeichnet,**
**daß** die Proxy-Funktion (Proxy) die Reihenfolge, in der Verbindungsaufbaumeldungen zu den einzelnen Gruppenendpunkten (B, C) übermittelt werden, nach einer Vorschrift für automatische Rufverteilung festlegt.

6. Verfahren nach Anspruch 4, **dadurch gekennzeichnet, daß**
einer der Gruppenendpunkte durch eine Einrichtung zum Aufzeichnen von Nachrichten realisiert ist, und
daß die Proxy-Funktion (Proxy) an diesen Gruppenendpunkt zuletzt eine Verbindungsaufbaumeldungen (H.225 Setup) übermittelt.

## Revendications

1. Procédé pour la réalisation d'une fonction de raccordement collectif dans un réseau de communication selon le standard ITU-T H.323, dans lequel une adresse de groupe est appelée par un point d'extrémité (A) appelant afin de produire un établissement de liaison avec un parmi plusieurs points d'extrémité de groupe (B, C) d'un raccordement collectif, **caractérisé par** les étapes suivantes :
- conversion d'une pseudo-adresse du raccordement collectif en une adresse de transport de groupe d'une fonction de Proxy (Proxy) et transmission d'un message d'établissement de liaison (H.225 Setup) par le point d'extrémité (A) appelant avec l'utilisation de l'adresse de transport de groupe (Pilot Address) à la fonction de Proxy ;
- transmission d'un message d'établissement de liaison (H.225 Setup) de la fonction de Proxy (Proxy) avec l'utilisation d'adresses de transport connues de la fonction de Proxy (Proxy) à des points d'extrémité de groupe (B, C) du raccordement collectif ;
- après transmission d'un message de réponse de l'un des points d'extrémité de groupe (B) à la fonction de Proxy (Proxy), on a une transmission de l'adresse de ce point d'extrémité (B) au point d'extrémité (A) appelant et une transmission de l'adresse du point d'extrémité appelant (A) au point d'extrémité de groupe répondant (B) par la fonction de Proxy (Proxy) ;
- établissement d'une liaison entre le point d'extrémité (A) appelant et le point d'extrémité de groupe (B) répondant avec l'utilisation des adresses de ces points d'extrémité (A, B).

2. Procédé selon la revendication 1,
**caractérisé en ce que**,
la fonction de Proxy (Proxy) signale au point d'extrémité (A) appelant la transmission d'un message d'établissement de liaison aux points d'extrémité de groupe (B, C).

3. Procédé selon la revendication 1 ou 2,
**caractérisé en ce que**,
la fonction de Proxy (Proxy) transmet simultanément un message d'établissement de liaison (H.225 Setup) à tous les points d'extrémité de groupe (B,C) et transmet au point d'extrémité (A) appelant l'adresse du point d'extrémité de groupe (B) duquel elle reçoit le premier message de réponse.

4. Procédé selon la revendication 1 ou 2,
**caractérisé en ce que**,
la fonction de Proxy (Proxy) transmet un message d'établissement de liaison à l'un des points d'extrémité de groupe (B, C) et, si aucun message de réponse n'a été transmis de ce point d'extrémité de groupe à la fonction de Proxy (Proxy) dans un laps de temps défini, transmet un message d'établissement de liaison à un autre des points d'extrémité de groupe (B, C) jusqu'à ce que l'un des points d'extrémité de groupe (B, C) transmette un message de réponse.

5. Procédé selon la revendication 4,
**caractérisé en ce que**,
la fonction de Proxy (Proxy) définit l'ordre de succession, dans lequel des messages d'établissement de liaison sont transmis aux points d'extrémité de groupe (B, C) individuels, selon une prescription pour la répartition d'appel automatique.

6. Procédé selon la revendication 4, **caractérisé en ce que** l'un des points d'extrémité de groupe est réalisé par un équipement pour l'enregistrement de messages, et
**en ce que** la fonction de Proxy (Proxy) transmet à ce point d'extrémité de groupe en dernier lieu un message d'établissement de liaison (H.225 Setup).

## Claims

1. Method for implementing a line group function in a communications network conforming to the ITU-T H.323 standard, wherein a group address is called by a calling endpoint (A) to effect a connection setup to one of a plurality of group endpoints (B, C) of a line group,
**characterised by** the following steps:
- Translating an alias address of the line group into a group transport address of a proxy function (Proxy) and transmitting a connection setup message (H.225 Setup) from the calling endpoint (A) to the proxy function using the group transport address (Pilot Address);
- Transmitting a connection setup message (H.225 Setup) from the proxy function (Proxy) to group endpoints (B, C) of the line group using transport addresses known to the proxy function (Proxy);
- Following transmission of a response message from one of the group endpoints (B) to the proxy function (Proxy), the address of said endpoint (B) is transmitted to the calling endpoint (A) and the address of the calling endpoint (A) is transmitted to the responding group endpoint (B) by the proxy function (Proxy);
- Setting up a connection between the calling endpoint (A) and the responding group endpoint (B) using the addresses of said endpoints (A, B).

2. Method according to claim 1,
**characterised in that**
the proxy function (Proxy) signals to the calling endpoint (A) that a connection setup message is being transmitted to the group endpoints (B, C).

3. The method according to claim 1 or 2,
**characterised in that**
the proxy function (Proxy) simultaneously transmits a connection setup message (H.225 Setup) to all group endpoints (B, C) and transmits to the calling endpoint (A) the address of the group endpoint (B) from which it receives the first response message.

4. The method according to claim 1 or 2,
**characterised in that**
the proxy function (Proxy) transmits a connection setup message to one of the group endpoints (B, C) and, if no response message has been transmitted to the proxy function (Proxy) from said group endpoint within a specific time period, transmits a connection setup message to another of the group endpoints (B, C) until one of the group endpoints (B, C) transmits a response message.

5. The method according to claim 4,
**characterised in that**
the proxy function (Proxy) defines the sequence in which connection setup messages will be transmitted to the individual group endpoints (B, C) in accordance with a rule for automatic call distribution.

6. The method according to claim 4,
**characterised in that**
one of the group endpoints is implemented by means of a device for recording messages, and
the proxy function (Proxy) transmits a connection setup message (H.225 Setup) to said group endpoint last.
